(19) Europäisches Patentamt
European Patent Office
Office européen des brevets

(11) Publication number: **0 018 737**
**B1**

# (12) EUROPEAN PATENT SPECIFICATION

(45) Date of publication of patent specification: **09.11.83**

(51) Int. Cl.[3]: **C 08 F 10/00**, C 08 F 4/02, C 08 F 4/62

(21) Application number: **80301159.2**

(22) Date of filing: **10.04.80**

## (54) Process for producing spherical carrier particles for olefin polymerisation catalyst, catalyst comprising such carrier particles, and use of such catalyst in olefin polymerisation.

(30) Priority: **11.04.79 JP 43002/79**
**11.04.79 JP 43003/79**

(43) Date of publication of application:
**12.11.80 Bulletin 80/23**

(45) Publication of the grant of the patent:
**09.11.83 Bulletin 83/45**

(84) Designated Contracting States:
**AT BE DE FR GB IT NL**

(56) References cited:
**FR - A - 2 283 909**
**US - A - 3 953 414**
**US - A - 4 021 599**

(73) Proprietor: **MITSUI PETROCHEMICAL INDUSTRIES, LTD.**
**2-5, Kasumigaseki 3-chome Chiyoda-ku**
**Tokyo 100 (JP)**

(72) Inventor: **Ushida, Yoshihisa**
**3-5, Misono 1-chome**
**Ohtake-shi Hiroshima-ken (JP)**
Inventor: **Amimoto, Yoshikatu**
**44-16, Hirata 6-chome**
**Iwakuni-shi Yamaguchi-ken (JP)**
Inventor: **Toyota, Akinori**
**103-21, Minami-iwakuni-machi**
**Iwakuni-shi Yamaguchi-ken (JP)**
Inventor: **Kashiwa, Norio**
**55-18, Midoro-cho, 2-chome**
**Iwakuni-shi Yamaguchi-ken (JP)**

(74) Representative: **Myerscough, Philip Boyd et al,**
**J.A.Kemp & Co. 14, South Square Gray's Inn**
**London, WC1R 5EU (GB)**

**EP 0 018 737 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Process for producing spherical carrier particles for olefin polymerisation catalyst, catalyst comprising such carrier particles, and use of such catalyst in olefin polymerisation

This invention relates to an improved process for producing spherical catalyst carrier particles for olefin polymerization catalysts. These carrier particles can be produced from inexpensive, easily available halogen-containing magnesium compounds by an easy operation with industrial advantage, and are particularly useful for preparing catalysts which are suitable for the production of olefin polymers in spherical particles having a high bulk density, a narrow particle size distribution and good flowability.

In the present application, the term "polymerization" denotes both homopolymerization and copolymerization, and the term "polymer" denotes both homopolymers and copolymers.

Many suggestions have been made in the past about the use of a transition metal compound supported on a carrier in the polymerization of olefins with or without dienes or other comonomers in the presence of catalysts composed of a transition metal compound component and an organometallic compound component. The use of spherical carrier particles in the carrier-supported transition metal compound is known to be contributory to the production of olefin polymers in the form of spherical particles. If the amount of olefin polymer yielded per unit weight of the carrier-supported transition metal compound component is sufficiently high, it will bring about a great advantage in industrial operations in that de-ashing of the olefin polymer can be omitted. Furthermore, if the use of the carrier-supported transition metal compound catalyst can lead to the formation of an olefin polymer having a high bulk density and a good particle size distribution, molding of the resulting polymer would become easy and even the customary granulation of the polymer could, in some cases, be omitted.

Attempts have been made to provide olefin polymerization catalyst carriers in the form of spherical particles. For example, Japanese Laid-Open Patent Publication No. 65999/74 (corresponding to British Patent No. 1,434,543) suggests the use of particles obtained by spray-granulating a molten mass of hydrated magnesium halide or an alcohol solution of magnesium halide as a carrier for olefin polymerization catalysts. Olefin polymer particles produced in the presence of a catalyst having the carrier particles prepared by the suggested method do not show satisfactory resistance to disintegration and tend to be disintegrated into a fine powder or irregularly-shaped particles during operation or handling after the polymerization operation, for example during pumping or centrifugation. Furthermore, the carrier itself has no sufficient resistance to disintegration, and makes it difficult to form satisfactory spherical polymer particles.

In order to overcome such difficulties, Japanese Laid-Open Patent Publication No. 38590/77 (corresponding to West German DOS No. 2,641,960) suggests the use of a magnesium halide hydrate prepared by a special method as a starting material for the carrier. This technique, however, has the disadvantage that the starting magnesium halide hydrate must be prepared by the special method which is complicated and difficult to carry out, and therefore the reproducibility of the quality of the resulting carrier is not good.

We have made investigations in order to provide a carrier which is free from the defects and disadvantages of prior techniques of providing spherical catalyst carrier particles for olefin polymerization. These investigations have led to the discovery that spherical carrier particles for olefin polymerization catalysts having satisfactory resistance to disintegration can be prepared commercially from readily available halogen-containing magnesium compounds by an easy and inexpensive means and with good reproducibility of quality.

According to the invention there is provided a process for producing spherical carrier particles for olefin polymerization catalyst, which comprises

(i) forming a suspension of molten particles of an adduct of a halogen-containing magnesium compound and an active hydrogen-containing organic compound in an organic liquid medium (A) in the presence of at least one auxiliary component selected from surface-active agents which are not siloxanes and siloxanes, and

(ii) quenching the resulting suspension to solidify the adduct particles.

A catalyst comprising a transition metal compound supported on the spherical carrier particles so obtained and an organometallic compound of a metal of Groups I to III of Mendelejeff's Periodic Table exhibits high activity in the polymerization of olefins, and can afford with good reproducibility an olefin polymer which has a high bulk density, spherical particles, a narrow particle size distribution, good resistance to disintegration and good flowability.

The carrier in accordance with this invention is derived from an adduct composed of a halogen-containing magnesium compound and an active hydrogen-containing organic compound. The halogen-containing magnesium compound forming the above adduct may be a complex which further contains other metals such as aluminum, tin, silicon or germanium. The adduct may be synthesized by any method, and it may be a mixture of two or more adducts.

Examples of the halogen-containing magnesium compound include magnesium halides, preferably magnesium dihalides, or their complexes; products obtained by halogenating organic magnesium compounds, organic magnesium-aluminum complexes, the reaction products of these with organic silicon compounds such as siloxane, silanol or alkoxysilane compounds, or organic acid salts,

alkoxides, aryloxides or acetylacetonates of magnesium, with halogenating agents, for example halogens such as chlorine, hydrogen halides such as hydrogen chloride, $PCl_3$, $POCl_3$, $BCl_3$, $SOCl_2$, $SiCl_4$, $AlCl_3$, aluminum alkyl monohalides, aluminum alkyl dihalides, alkoxy aluminum halides or benzoyl chloride; products obtained by mixing and milling the aforesaid halogenation products and the aforesaid magnesium compounds; the reaction products of magnesium, alcohol and halogenating agents such as hydrogen halides or halogen-containing silicon compounds; and decomposition products of Grignard reagents. Among these halogen-containing magnesium compounds preferred are magnesium dihalides and the complexes thereof, for example magnesium chloride, magnesium bromide, magnesium iodide, and the complexes of these.

The active hydrogen-containing organic compound forming the adduct includes; for example, alcohols, phenols, organic carboxylic acids, and amines. The alcohols are preferred. Specific examples of the active hydrogen-containing organic compound are alcohols having 1 to 18 carbon atoms such as methanol, ethanol, n-propanol, isopropanol, n-butanol, isobutanol, sec-butanol, tert-butanol, n-pentanol, n-hexanol, n-octanol, 2-ethylhexanol, n-decanol, n-dodecanol, n-hexadecyl alcohol, stearyl alcohol and oleyl alcohol; phenols having 6 to 15 carbon atoms such as phenol, cresol, xylenol, ethylphenol, isopropylphenol, p-tert-butylphenol, n-octylphenol, n-nonylphenol, cumyl phenol and naphthol; carboxylic acids having 1 to 18 carbon atoms such as formic acid, acetic acid, propionic acid, butyric acid, caproic acid, caprylic acid, lauric acid, stearic acid and olefic acid; and amines having 1 to 16 carbon atoms such as methylamine, ethylamine, diethylamine, n-propylamine, n-hexylamine, laurylamine, cyclohexylamine, aniline, benzylamine, and ethanolamine. These active hydrogen-containing compounds may be used in combina-tion of two or more.

When the halogen-containing magnesium compound is a magnesium dihalide $MgX_2$ (X is halogen) which is a preferred species in this invention as described hereinabove, the resulting adduct can be expressed by the formula $MgX_2.Y_n$ in which Y is the active-hydrogen-containing compound and n is a number of from 1 to 10. As the hydrogen-containing compound in this case, an alcohol is especially preferred because it can give adducts which have a relatively low melting point and therefore can be easily formed into adduct particles in the molten state suspended in an organic liquid medium (A), and which when a transition metal compound is supported on it, can easily afford a catalyst of high performance.

The adduct is suspended in the molten state in the organic liquid medium (A). Accordingly, the organic liquid medium (A) should not have such a high level of affinity for the adduct that a suspension of the adduct particles in the molten state cannot be formed. As the organic liquid medium (A), hydrocarbons such as hexane, heptane, octane, decane, kerosene, cyclohexane, benzene, toluene, xylene, cumene, cymene, diisopropylbenzene, tetralin, decalin and dimethylnaphthaline are especially suitable. Other solvents such as halogenated hydrocarbons and ethers can also be used. These organic media may be used singly or in combination with each other.

In preparing the suspension of the adduct in the molten state in the organic liquid medium (A), at least one auxiliary component selected from surface-active agents (excluding siloxanes) and siloxanes is caused to be present in the medium.

The surface-active agents (surfactants) may be any of anionic, cationic, non-ionic and amphoteric surfactants. Oil-soluble surfactants are suitable in this invention, and those having an HLB of less than 6 are preferred.

Specific examples of the surfactants include polyoxyalkylene glycols having a $C_2$—$C_3$ alkylene group such as polyoxypropylene glycol and polyoxyethylenepolyoxypropylene glycol; polyoxyalkylene $C_8$—$C_{18}$ alkyl ethers having a $C_2$—$C_3$ alkylene group such as polyoxyethylene stearyl ether, polyoxyethylene cetyl ether, polyoxyethylene myristyl ether, polyoxyethylene oleyl ether and polyoxyethylene-polyoxypropylene lauryl ether; polyoxyalkylene $C_{12}$—$C_{22}$ aryl ethers having a $C_2$—$C_3$ alkylene group such as polyoxyethylene nonyl phenol ether, polyoxyethylenepolyoxypropylene octyl phenol ether and polyoxyethylene styrenated phenol; polyoxyalkylene acyl esters having an acyl group derived from a $C_8$—$C_{24}$ carboxylic acid and a $C_2$—$C_3$ alkylene group, such as polyoxyethylene monolaurate, polyoxyethylene dilaurate, polyoxyethylene stearate, polyoxyethylene oleate, polyoxyethylene sorbitan monoleate, polyoxyethylene sorbitan monolaurate and polyoxyethylene castor oil; esters of $C_{12}$—$C_{18}$ fatty acids with $C_2$—$C_{12}$ polyhydric alcohols, such as ethylene glycol fatty acid esters, diethylene glycol fatty acid esters, propylene glycol fatty acid esters, glycerin fatty acid esters, sorbitan fatty acid esters and sucrose fatty acid esters; polyoxyethylene alkylamides; polyoxyethylene alkylamines; fatty acid N-alkanolamides having a $C_2$—$C_3$ alkanol group; quaternary ammonium salts; betaine; polyether phosphate; and polyether sulfate.

More specific examples of the surfactants are sorbitan trioleate (HLB 1.8), sorbitan tristearate (HLB 2.1), propylene glycol monostearate (HLB 3.4), sorbitan sesquioleate (HLB 3.7), sorbitan monoleate (HLB 4.3), sorbitan distearate (HLB 4.4), propylene glycol monolaurate (HLB 4.5), sorbitan monostearate (HLB 4.7), diethylene glycol monostearate (HLB 4.7), diethylene glycol monolaurate (HLB 6.1), sorbitan monopalmitate (HLB 6.7), and sorbitan monolaurate (HLB 8.6). These surfactants may be used in combination of two or more.

The amount of the surfactant is that sufficient for the adduct of the halogen-containing magnesium compound and the active hydrogen-containing compound to be suspended in the molten

state in the organic medium (A). For example, the suitable concentration of the surfactant in the organic liquid medium (A) is 0.1 to 30 g/liter, especially 0.5 to 20 g/liter. The concentration of the adduct in the organic liquid medium (A) is, for example, 0.05 to 2 moles/liter, preferably 0.1 to 1 mole/liter.

Examples of the siloxanes as the auxiliary component are listed below.

(1) Linear polysiloxanes of the general formula $Q(Q_2SiO)_nSiO_3$ in which Q represents hydrogen, a hydroxyl group, an alkyl group having, for example, 1 to 4 carbon atoms, an aryl group having, for example 6 to 8 carbon atoms, a cycloalkyl group having, for example, 3 to 8 carbon atoms, an alkoxy group, having, for example, 1 to 12 carbon atoms, or a phenoxy group, and the Q groups may be identical or different with the proviso that not all of Q groups are hydrogens; and *n* represents an integer of, for example, from 1 to 1000.;

Specific examples of the linear polysiloxanes are dimethylsiloxane, methylphenylsiloxane, methylhydrogensiloxane, hexamethyldisiloxane, deca-methyltetrasiloxane, tetracosamethylundecasiloxane, 3-hydroheptamethyltrisiloxane, 3,5-dihydrooctamethyltetrasiloxane, 3,5,7-trihydrononamethylpentasiloxane, tetramethyl-1,3-diphenyldisiloxane, pentamethyl-1,3,5-triphenyltrisiloxane, heptaphenyldisiloxane, and octaphenyltrisiloxane.

(2) Cyclopolysiloxanes of the general formula $(Q'_2SiO)_p$ in which Q′ represents hydrogen, an alkyl group having, for example, 1 to 4 carbon atoms, a cycloalkyl group having for example, 3 to 8 carbon atoms, an aryl group having, for example 6 to 8 carbon atoms, an alkoxy group having, for example, 1 to 12 carbon atoms, or a phenoxy group, the Q′ groups may be identical or different with the proviso that not all of the Q′ groups are hydrogens, and *p* usually represents an integer of 1 to 10.

Specific examples of the cyclopolysiloxanes are 2,4,6-trimethylcyclotrisiloxane, 2,4,6,8-tetramethylcyclotetrasiloxane, hexamethylcyclotrisiloxane, octamethylcyclotetrasiloxane, decamethylcyclopentasiloxane, dodecamethylcyclohexasiloxane, triphenyl-1,3,5-trimethylcyclotrisiloxane, hexaphenylcyclotrisiloxane, and octaphenylcyclotetrasiloxane.

(3) Various modified siloxanes, for example acid-modified siloxanes such as

$$HOOCC_2H_4Si(CH_3)_2O(CH_3)_2SiC_2H_4COOH,$$
$$(CH_3)_3SiOSi(CH_3)_2CH_2COOH, \text{ and}$$
$$[(CH_3)_3SiO]_2Si(CH_3)(CH_2)_3OSO_3H;$$

amine-modified siloxanes such as

$$[(CH_3)_3SiO]_3Si(CH_2)_3NH(CH_2)_2NH_2;$$

oxyalkylene-modified siloxanes such as

$$[C_4H_9O(C_2H_4O)_l(C_3H_6O)_mCH_2CH(OH)CH_2OC_3H_6Si(CH_3)_2]_2O[\underset{CH_3}{\overset{CH_3}{Si}}O]_x$$

and

$$(CH_3)_3SiO[\underset{CH_3}{\overset{CH_3}{Si}}O]_x\underset{CH_3}{\overset{CH_3}{Si}}O(C_2H_4O)_qCH_3.$$

In the above exemplification, l, m, q and x, for example, represent the following numbers.

$$1 \leqq x \leqq 500,\ 0 \leqq l \leqq 500,\ 0 \leqq m \leqq 500,\ l = q = 500.$$

Two or more siloxanes may be used together if they are compatible with each other.

The amount of the siloxane is 0.1 to 40% by weight, preferably 0.2 to 10% by weight, based on the weight of the organic medium.

According to the process of this invention, particles of the adduct in the molten state composed of the halogen-containing magnesium compound and the active hydrogen-containing organic compound is suspended in the organic liquid medium (A) in the co-presence of the auxiliary component selected from surfactants and siloxanes of the types exemplified hereinabove to form a suspension of the adduct particles in the molten state. The suspension can be formed, for example, by suspending the adduct

particles in the molten state in the organic liquid medium (A) in the co-presence of at least one auxiliary component at a temperature at which the adduct melts or at a higher temperature by a known suspending means. Examples of the suspending means are a shaking method, a stirring method, a leaking method, an injection method, the Jurgen-lohman method, an ultrasonic method, a colloid mill method, a high-pressure jetting method, or combinations of these.

By using these suspending means, the suspension can be formed so that the adduct particles in the suspension become spherical particles having a particle diameter of 0.1 to 200 $\mu$m, preferably 1 to 100 $\mu$m.

By quenching the resulting suspension of the adduct particles in the molten state, the adduct particles are solidified and the desired spherical catalyst carrier can be formed. Any desired means of quenching can be employed unless the suspended particles coalesce with each other or deform to substantially lose the desired spherical shape. In one preferred embodiment, the suspension formed is rapidly contacted with an organic liquid medium (B) having a temperature low enough to solidify the adduct particles in the molten state. In the practice of this embodiment, the suspension can be introduced into the organic liquid medium (B) preferably with stirring. Or conversely, the medium (B) may be introduced into the suspension. The organic liquid medium (B) need not to be, but may be, the same as the organic liquid medium (A). It may be properly selected from the compounds exemplified hereinabove as the organic liquid medium (A).

In the quenching step, it is preferred to maintain the temperature of the organic liquid medium (B) at a point at least 10°C lower than the melting temperature of the adduct as suspended particles. If desired, the aforesaid auxiliary component may also be incorporated in the medium (B).

In another embodiment of quenching, a liquefied gas held at a low temperature such as liquefied carbon dioxide gas or liquefied propane may be blown into the suspension of the adduct particles in the molten state and is gasified in the suspension to quench the suspension system and solidify the adduct particles.

The solidified particles of the adduct may be separated and recovered by any known solid-liquid separating means such as filtration or centrifugal separation. The resulting carrier for olefin polymerization catalysts is hard and exhibits satisfactory resistance to disintegration in the subsequent operations and handling. It is in the form of good spherical particles having a narrow distribution of particle size. A transition metal compound catalyst component for olefin polymerization obtained by supporting a transition metal compound on the resulting carrier by any means which does not substantially involve pulverisation equally has the advantage of being hard and resistant to disintegration. Of course, the resulting spherical carrier particles may be classified to obtain a narrower size distribution before it is used in supporting the transition metal compound.

Various methods can be employed in supporting the transition metal compound on the carrier obtained by the process of this invention. They include, for example, a method which comprises reacting the carrier directly with the transition metal compound as in Japanese Patent Publication No. 34092/71 (corresponding to British Patent 1,271,411); a method which comprises reacting the carrier with an organometallic compound of a metal of Groups I to III of the periodic table and then reacting the product with the transition metal compound as in Japanese Patent Publication No. 32270/75 (corresponding to British Patent No. 1,433,537) or Japanese Laid-Open Patent Publication No. 21093/78 (corresponding to West German DOS No. 2735672); a method which comprises reacting the carrier with a halogen compound or organic compound of silicon or tin and the transition metal compound consecutively or simultaneously as in Japanese Laid-Open Publication No. 72383/74 and 88983/74 (the two Publications correspond to British Patent No. 1,452,314); a method which comprises reacting the carrier with an organic acid ester and an organometallic compound of a metal of Groups I to III of the periodic table, and then reacting, the product with the transition metal compound as in Japanese Laid-Open Patent Publication No. 28189/76 (corresponding to British Patent No. 1,502,886); a method which comprises reacting the carrier with an organic acid ester and a halogen compound or organic compound of silicon or tin, and then reacting the product with the transition metal compound as in Japanese Laid-Open Patent Publication No. 92885/76 (corresponding to British Patent No. 1,505,315); a method which comprises reacting the transition metal catalyst component obtained by any of the above-cited methods further with an organometallic compound of a metal of Groups I to III and the transition metal compound, as shown in Japanese Laid-Open Patent Publication No. 127185/76; and a method which comprises reacting the transition metal compound obtained in each of the aforesaid methods with an electron donor and the transition metal compound as in Japanese Laid-Open Patent Publication No. 30888/77.

The transition metal compound to be supported on the catalyst carrier obtained by the process of this invention may, for example, be compounds of titanium, vanadium, chromium, etc. The titanium compounds are preferred.

The supporting reaction may be performed by suspending the carrier, with or without the pretreatment exemplified, in the transition metal compound which is maintained in the liquid phase under the supporting reaction conditions, or in a solution of the transition metal compound in an inert organic solvent. The supporting reaction can be carried out at a temperature of 0°C to 200°C, preferably 30 to 150°C. Preferably, the supporting reaction is carried out in the presence of an excess of the transition

metal compound, and for example, 0.1 to 100 moles, preferably 1 to 50 moles, of the transition metal compound is present per gram-atom of magnesium in the carrier. The supporting reaction may be performed in two steps or more. Preferred transition metal compounds are those which are liquid under the supporting reaction conditions, or are soluble in a solvent that may be used in the reaction. Specific examples are titanium compounds of the formula $Ti(OR)_nX_{4-n}$ in which R represents a hydrocarbon group, X represents a halogen atom, and n is a number represented by $0 \leqq n \leqq 4$; and vanadium compounds of the formula $VX_4$ or $VO(OR)_mX_{3-m}$ in which R and X are as defined, and m is a number represented by $0 \leqq m \leqq 3$. Examples of the group R are alkyl groups having 2 to 18 carbon atoms, cycloalkyl groups having 5 to 8 carbon atoms, an allyl group, and aryl groups having 6 to 15 carbon atoms. Examples of X are chlorine, bromine, and iodine. The titanium compounds are preferred, and titanium tetrahalides are especially preferred.

Pre-treatment of the carrier with an electron donor, an organometallic compound of a metal of Groups I to III of the periodic table, a halogen compound or organic compound of silicon or tin, etc. prior to the supporting of the transition metal compound is described in detail, for example, in the patent documents cited hereinabove. For example, the pre-treatment may be carried out at 0 to 150°C while suspending the carrier in an inert solvent.

The catalyst component obtained by supporting the transition metal compound on the carrier obtained by the process of this invention contains 3 to 120 mg, preferably 5 to 60 mg, of transition metal per gram of catalyst component. The atomic ratio of the halogen to the transition metal is at least 4, preferably at least 8, more preferably from 8 to 50. The aforesaid catalyst component contains magnesium, halogen and transition metal as essentiual ingredients, and may optionally contain an electron donor such as an organic acid ester.

The supported transition metal catalyst component so obtained, in combination with an organometallic compound of a metal of Groups I to III of the Mendeleejeff's periodic table, can be used in the polymerization or copolymerization of olefins with or without dienes and other comonomers. Organoaluminum compounds are preferred as the organometallic compounds. Especially preferred among them are trialkyl aluminums, dialkyl aluminum halides, alkyl aluminum sesquihalides, alkyl aluminum halides, and mixtures of these.

Suitable olefins used in the aforesaid polymerization are $C_2$—$C_{10}$ olefins such as ethylene, propylene, 1-butene, 4-methyl-1-pentene and 1-octene. They may be subjected not only to monopolymerization but also to random copolymerization and block copolymerization. In copolymerization, polyunsaturated compounds such as conjugated or non-conjugated dienes may be selected as the comonomers. For example, in the copolymerization of propylene, there may be employed a method which comprises polymerizing propylene until the amount of propylene homopolymer is 60 to 90% by weight based on the entire composition, and subsequently, polymerizing a propylene-ethylene mixture or ethylene. Alternatively, a mixture of propylene and ethylene may be polymerized in order to obtain a copolymer containing ethylene in an amount of not more than 10 mole%.

The polymerization may be carried out either in the liquid phase or in the vapor phase. In the liquid-phase polymerization, an inert solvent such as hexane, heptane or kerosene may be used as a reaction medium, but the olefin itself may also be used as the reaction medium. It is preferred that in the liquid phase polymerization, the amount of the supported transition metal compound component be 0.001 to 1 millimole calculated as transition metal atom per liter of the liquid phase, and the amount of the organometallic compound be 1 to 1000 moles, preferably 5 to 500 moles, calculated as metal atoms per mole of transition metal. When the vapor-phase polymerization is carried out, a fluidized layer, a stirred fluidized layer, etc. may be employed, and the supported transition metal compound is fed into the polymerization reactor with or without dilution with a solid such as polyethylene, polypropylene, glass beads or silica, hexane, olefins, etc. while the organo-metallic compound is fed into the polymerization vessel with or without dilution with hexane, olefins, etc. In some cases, hydrogen, etc. may be fed in the form of gas into the polymerization vessel. The proportions of the catalyst components are the same as in the case of the liquid-phase polymerization.

The olefin polymerizing temperature is generally 20 to 200°C, preferably 20°C to a point below the melting point of the resulting polyolefin, especially preferably 40 to 120°C. The polymerization can be performed at atmospheric pressure to 100 $kg/cm^2 \cdot G$, preferably at elevated pressure of 2 to 50 $kg/cm^2 \cdot G$.

In the polymerization of alpha-olefins, the molecular weight of the polymer can be adjusted to some extent by varying the polymerization conditions such as the polymerization temperature or the mole ratio of the catalyst ingredients. It can be effectively performed by adding hydrogen to the polymerization system. In the polymerization of alpha-olefins having at least 3 carbon atoms, there may be used an electron donor such as alcohols, ethers, esters, amines, acid anhydrides, ketones, carboxylic acids, amides, phosphorus compounds and polysiloxanes in order, for example, to control stereospecificity. The electron donor may be used in the form of an adduct with the organometallic compound or a Lewis acid such as $AlX_3$.

When, for example, propylene is polymerized using the supported transition metal catalyst component on the carrier obtained by the process of this invention, the amount of the transition metal is extremely small for the amount of polypropylene formed, and the polypropylene obtained is in the

form of spherical particles having a narrow particle size distribution and a high bulk density. Accordingly, this offers the advantage that the after-treatment of the polymer subsequent to the polymerization is very much simplified, or in many cases is not required at all. In polymerization in the absence of a solvent, great improvements are obtained in problems associated with the polymerization process, such as the uniformity of the fluidized condition, process restrictions by the formation of a fine powdery polymer, or the in-process transportation of the polymer powder, and a polymer which can directly be a final product can be obtained by the solventless polymerization.

The following examples illustrate the present invention more specifically.

Example 1

[I] Synthesis of spherical $MgCl_2 \cdot nEtOH$

A 2-liter high-speed stirrer (a product of Tokushu Kika Kogyo K. K.), after full purging with nitrogen gas, was charged with 700 ml of purified kerosene, 10 g of commercially available $MgCl_2$, 24.2 g of ethanol and 3 g of Emasol 320 (a trade mark of surfactants, a product of Kao-Atlas Co., Ltd; sorbitan distearate). The temperature was raised with stirring, and they were stirred at 120°C for 30 minutes at 8,000 rpm. With high-speed stirring, the mixture was transferred by means of a Teflon tube having an inside diameter of 5 mm to a 2-liter glass flask (equipped with a stirrer) charged previously with 1 liter of purified kerosene cooled to −10°C. The resulting solid was collected by filtration, and washed thoroughly with hexane to form a carrier. Microscopic observation showed that the solid particles were completely spherical and had a particle diameter of 10 to 40 $\mu$m.

[II] Preparation of a Ti-containing catalyst component

A 300 ml glass flask was charged with 10 g of the solid obtained in [I] above (containing 30.7 millimoles of $MgCl_2$) and 100 ml of purified kerosene, and then 12.1 ml of triethyl aluminum was added dropwise at 5°C with stirring. The mixture was stirred at 25°C for 1 hour, and then at 80°C for 3 hours. The solid portion was collected with filtration, thoroughly washed with hexane, and dried. The resulting solid was suspended in 100 ml of purified kerosene, and dry air was blown into the suspension for 2 hours with stirring. The solid portion was collected by filtration, and washed fully with hexane. The resulting solid was suspended in 100 ml of purified kerosene, and 1.9 ml of ethyl benzoate was added. The mixture was stirred at 25°C for 1 hour and then at 80°C for 2 hours. The solid portion was collected by filtration, washed thoroughly with hexane, and dried. The solid was transferred to a 200 ml glass flask, and 100 ml of $TiCl_4$ was added. The mixture was stirred at 90°C for 2 hours. The supernatant liquid was removed by decantation, and further 100 ml of $TiCl_4$ was added, followed by stirring at 90°C for 2 hours. The solid portion was collected by hot filtration, and thoroughly washed with hot kerosene and hexane to afford a Ti-containing catalyst component which contained 3.8% by weight of Ti, 61.0% by weight of Cl, 18.0% by weight of Mg and 10.1% by weight of ethyl benzoate as atoms and had a specific surface area of 280 $m^2/g$ and an average particle diameter of 33 $\mu$m.

(III) Polymerization

A 2-liter autoclave was charged with 0.75 liter of hexane, and in an atmosphere of propylene, 3.75 millimoles of triethyl aluminum, 1.25 millimoles of methyl p-toluate and 0.0225 mg calculated as Ti atom of the Ti-containing catalyst component obtained in [II] above were introduced into the autoclave. Then, 400 Nml of $H_2$ was added, and the polymerization system was heated to 60°C. The total pressure was raised to 7.0 $kg/cm^2 \cdot G$ with propylene. While maintaining the pressure of propylene, propylene was polymerized for 4 hours. After the polymerization, the slurry containing the polymer was filtered to afford 193 g of a white polymer. The polymer had a boiling n-heptane extraction residue of 96.4%, an apparent density of 0.41 g/ml and a melt flow index (MI) of 4.2. The polymer has an average particle diameter of 740 $\mu$m and a particle diameter distribution of 99% by weight in the range of 0.1 to 1.0 mm, and was spherical in shape. Concentrating the solvent layer gave 4.8 g of a solvent-soluble polymer. Accordingly, the average specific polymerization activity of the Ti-containing catalyst component was 8,800 g-PP/mmol-Ti.

Examples 2 to 6

Example 1 was repeated except that in the synthesis of spherical $MgCl_2 \cdot nEtOH$ in Example 1, each of the compounds shown in Table 1 was used instead of Emasol 320. The results are shown in Table 1.

TABLE 1

| | Synthesis of spherical $MgCl_2 \cdot nEtOH$ | | | Ti-containing catalyst | | | |
|---|---|---|---|---|---|---|---|
| Example | Surfactant (g) | HLB | Particle diameter ($\mu m$) | Ti wt. % | Cl wt. % | EB wt. % | Average particle diameter ($\mu m$) |
| 2 | Span 60 (sorbitan monostearate) (4.0) | 4.7 | 10—100 | 3.4 | 61.0 | 10.3 | 43 |
| 3 | Span 65 (sorbitan tristearate) (4.0) | 2.1 | 10—90 | 3.7 | 60.0 | 9.8 | 40 |
| 4 | Span 80 (sorbitan monoleate) (4.0) | 4.3 | 5—180 | 4.2 | 58.0 | 11.7 | 36 |
| 5 | Emasol 83 (sorbitan sesquioleate) (4.0) | 3.7 | 10—100 | 4.0 | 59.0 | 10.8 | 38 |
| 6 | Span 85 (sorbitan trioleate) (4.0) | 1.8 | 5—100 | 3.2 | 61.0 | 9.5 | 30 |

TABLE 1 (continued)

| | Results of polymerization | | | | | | | |
|---|---|---|---|---|---|---|---|---|
| Example | White powdery polymer (g) | n-Heptane extraction residue (%) | Apparent density (g/ml) | MI | Average particle diameter ($\mu m$) | Polymer with a particle diameter of 0.1—1.0 mm (wt. %) | Solvent-soluble polymer (g) | Specific polymerization activity (g-PP/mmol-Ti) |
| 2 | 184 | 96.0 | 0.39 | 3.7 | 810 | 96 | 4.3 | 8,400 |
| 3 | 190 | 95.9 | 0.41 | 5.1 | 790 | 97 | 4.7 | 8,700 |
| 4 | 169 | 96.2 | 0.38 | 4.0 | 750 | 92 | 5.2 | 7,700 |
| 5 | 187 | 96.3 | 0.41 | 3.3 | 800 | 96 | 5.3 | 8,500 |
| 6 | 203 | 95.8 | 0.40 | 3.0 | 670 | 97 | 5.0 | 9,200 |

["SPAN" and "EMASOL" are Registered Trade Marks]

Comparative Example 1

The procedure set forth in [I] of Example 1 was repeated except that Emasol 320 was not used. A spherical carrier was scarcely obtained.

A Ti-containing catalyst component was prepared in the same way as in [II] of Example 1 using the resulting carrier. The catalyst component contained 3.0% by weight of Ti, 62.0% by weight of Cl and 10.5% by weight of ethyl benzoate as atoms.

Propylene was polymerized using the resulting Ti-containing catalyst component in the same way as in [III] of Example 1. There was obtained 200 g of a white powdery polymer. It had a boiling n-heptane extraction residue of 95.7% and a melt flow index of 3.0, but its apparent density was as low as 0.33 g/mole. The particle size distribution of the polymer was broad, and particles having a particle diameter of 0.1 to 1.0 mm accounted for 68% of the total weight of the polymer.

Concentrating the solvent layer afforded 5.8 g of a solvent-soluble polymer.

Examples 7 to 12

The procedure set forth in Example 1 was carried out in the same way as in Example 1 except that in the synthesis of spherical $MgCl_2 \cdot nEtOH$ in Example 1, the amount of Emasol 320 was changed as shown in Table 2. The results are shown in Table 2.

TABLE 2

| Example | Synthesis of spherical $MgCl_2 \cdot nEtOH$ | | Ti-containing catalyst component | | | |
|---|---|---|---|---|---|---|
| | Amount of Emasol 320 | Particle size (μm) | Ti (wt. %) | Cl (wt. %) | EB (wt. %) | Average particle diameter (μm) |
| 7 | 8 | 5—80 | 4.2 | 59.0 | 9.8 | 38 |
| 8 | 6 | 10—80 | 4.2 | 60.0 | 10.3 | 36 |
| 9 | 5 | 10—70 | 4.0 | 61.0 | 11.0 | 33 |
| 10 | 4 | 10—60 | 3.6 | 61.0 | 10.0 | 35 |
| 11 | 2 | 10—70 | 3.2 | 60.0 | 10.5 | 35 |
| 12 | 1 | 10—90 | 3.2 | 62.0 | 9.4 | 41 |

TABLE 2 (continued)

| Example | Results of polymerization | | | | | | | |
|---|---|---|---|---|---|---|---|---|
| | White powdery polymer (g) | n-Heptane extraction residue (%) | Apparent density (g/ml) | MI | Average particle diameter ($\mu m$) | Polymer with a particle diameter of 0.1—1.0 mm (wt. %) | Solvent-soluble polymer (g) | Specific polymerization activity (g-PP/mmol-Ti) |
| 7 | 170 | 95.7 | 0.39 | 4.8 | 800 | 96 | 5.1 | 7,800 |
| 8 | 159 | 96.5 | 0.40 | 3.0 | 760 | 98 | 5.4 | 7,300 |
| 9 | 223 | 95.0 | 0.41 | 2.9 | 800 | 98 | 6.0 | 10,200 |
| 10 | 210 | 95.7 | 0.40 | 3.6 | 810 | 99 | 4.7 | 9,500 |
| 11 | 198 | 96.3 | 0.40 | 4.0 | 730 | 99 | 4.6 | 9,000 |
| 12 | 211 | 95.8 | 0.38 | 5.1 | 830 | 93 | 5.3 | 9,600 |

Example 13

[I] Synthesis of spherical $MgCl_2 \cdot nEtOH$

A 3-liter autoclave, after full purging with nitrogen gas, was charged with 1.5 liters of purified kerosene, 75 g of commercially available $MgCl_2$, 109 g of ethanol and 10 g of Emasol 320, and they were heated with stirring. The mixture was stirred at 125°C for 20 minutes at a stirring speed of 600 rpm. The pressure of the inside of the autoclave was adjusted to 10 $kg/cm^2 \cdot G$ with $N_2$, and a cock attached to a stainless steel tube having an inside diameter of 3 mm kept at 125°C and connected directly to the autoclave was opened to transfer the mixture in the autoclave to a 5-liter glass flask equipped with a stirrer and containing 3 liters of purified kerosene cooled at −15°C. The amount of the mixture thus transferred was 1 liter, and the time required for the transfer was about 20 seconds. The resulting solid was collected by filtration, and washed thoroughly with hexane to obtain a carrier. Microscopic observation showed that the resulting solid was in the form of completely spherical particles having a particle diameter of 5 to 30 $\mu m$.

[II] Preparation of a Ti-containing catalyst component

A 300 ml glass flask was charged with 8.1 g of the solid obtained in [I] above (containing 34.7 millimoles of $MgCl_2$) and 100 ml of purified kerosene. With stirring at 0°C, 1.1 ml of benzoyl chloride was added, and then 19.8 ml of $TiCl_4$ was slowly added dropwise at 0°C. After the addition, the temperature was raised to 20°C over the course of 20 minutes. At 20°C, 100 ml of $TiCl_4$ was again added, and contacted at 40°C for 4 hours. The solid portion was collected by filtration. The solid was transferred to a 300 ml glass flask, and 200 ml of $TiCl_4$ was further added. They were contacted with each other with stirring at 90°C for 2 hours. The solid portion was collected by hot filtration, washed with hot kerosene and hexane, and dried.

The resulting Ti-containing catalyst component contained 4.3% by weight of Ti, 58.0% by weight of Cl, 20.0% by weight of Mg and 9.1% by weight of ethyl benzoate as atoms. The catalyst component had a specific surface area of 186 $m^2/g$ and an average particle diameter of 10 $\mu m$.

[III] Polymerization

Propylene was polymerized in the same way as in Example 1 using the Ti-containing catalyst component thus obtained. There was obtained 162 g of a white powdery polymer having a boiling n-heptane extraction residue of 94.7%, an apparent density of 0.43 g/ml and a melt flow index of 3.2. The polymer had an average particle diameter of 280 $\mu m$ and particles having a particle diameter of 0.1 to 1.0 mm accounted for 99% by weight of the total weight of the polymer. The polymer was in the form of spherical particles. Concentrating the solvent layer afforded 5.6 g of a solvent-soluble polymer. Accordingly, the average specific polymerization activity of the Ti-containing catalyst component was 7,400 g-PP/mmol-Ti.

Example 14

[I] Synthesis of spherical $MgCl_2 \cdot nEtOH$

A 2-liter high-speed stirrer (a product of Tokushu Kika Kogyo K. K.), after full purging with nitrogen gas, was charged with 700 ml of purified kerosene, 10 g of commercially available $MgCl_2$, 24.2 g of ethanol and 2.7 ml of YF—3860 (a trademark for polyoxyalkylene-modified siloxane, a product of Toshiba Silicone Co., Ltd.). The system was heated with stirring, and stirred for 10 minutes at 120°C and 8,000 rpm. With stirring at high speed, the mixture was transferred by means of a Teflon tube having an inside diameter of 5 mm to a 2-liter glass flask equipped with a stirrer into which 1 liter of purified kerosene cooled at −10°C had been previously introduced. The resulting solid was collected by filtration, washed thoroughly with hexane, and dried at 35°C for 4 hours. Microscopic examination showed that the solid was in the form of completely spherical particles and had a particle diameter of 10 to 80 $\mu m$.

[II] Preparation of a Ti-containing catalyst component

A 300 ml glass flask was charged with 10 g of the solid (containing 39.0 millimoles of $MgCl_2$) obtained in [I] above, and with stirring, 1.1 ml of ethyl benzoate was added at 0°C. Then, at 0°C, 22.5 ml of $TiCl_4$ was slowly added dropwise. After the addition, the mixture was stirred at 20°C for 1 hour. Further, 100 ml of $TiCl_4$ was added and contacted at 100°C for 2 hours. The solid portion was collected by filtration. The solid was transferred to a 300 ml glass flask, and 200 ml of $TiCl_4$ was further added. They were contacted with each other with stirring at 100°C for 2 hours. The solid portion was collected by hot filtration, washed with hot kerosene and hexane, and dried. The resulting Ti-containing catalyst component contained 5.7% by weight of Ti, 55.0% by weight of Cl, 15.0% by weight of Mg and 9.8% by weight of ethyl benzoate as atoms. The Ti-containing catalyst component had a specific surface area of 153 $m^2/g$ and an average particle diameter of 38 $\mu m$.

[III] Polymerization

A 2-liter autoclave was charged with 0.75 liter of hexane, and under an atmosphere of propylene, 3.75 millimoles of triethyl aluminum, 1.25 millimoles of methyl p-toluate and 0.0225 mg, as Ti atom, of the Ti-containing solid catalyst component prepared in [II] above were fed. 400 N ml of $H_2$ was

introduced, and the polymerization system was heated to 60°C. The total pressure was raised to 7.0 kg/cm²·G with propylene, and the polymerization was performed for 4 hours while maintaining the propylene pressure.

After the polymerization, the slurry containing the resulting polymer was filtered to give 108 g of a white powdery polymer having a boiling n-heptane extraction residue of 96.7%, an apparent density of 0.39 g/ml and a melt flow index of 1.2. The polymer was in the form of spherical particles having an average particle diameter of 530 μm and a particle size distribution of 97% by weight in the range of 0.1 to 1.0 mm. Concentrating the solvent layer afforded 3.0 g of a solvent-soluble polymer. Accordingly, the average specific polymerization activity of the Ti-containing catalyst component was 4,900 g-PP/mmol-Ti.

Example 15

A catalyst carrier was prepared in the same way as in Example 14 except that in the synthesis of spherical $MgCl_2 \cdot nEtOH$ in Example 14, the amount of YF—3860 used to melt a complex of $MgCl_2$ and ethanol in purified kerosene was changed to 4.0 ml, and 3.0 ml of YF—3860 was put into the cooled purified kerosene used to solidify the molten complex. The resulting carrier was a solid in completely spherical form having a particle diameter of 5 to 30 μm.

A Ti-containing catalyst component was prepared in the same way as in Example 14 using the resulting solid carrier. The product contained 5.5% by weight of Ti, 57.0% by weight of Cl, 17.0% by weight of Mg and 8.4% by weight of ethyl benzoate as atoms and had an average particle diameter of 14 μm.

Using the resulting Ti-containing catalyst component, propylene was polymerized in the same way as in Example 1 to afford 120 g of a white powdery polymer having a boiling n-heptane extraction residue of 95.2%, an apparent density of 0.41 g/ml and a melt flow index of 1.3. The polymer was in the form of spherical particles having an average particle diameter of 270 μm and a particle size distribution of 99% by weight in the range of 0.1 to 1.0 mm. Concentrating the solvent layer afforded 3.6 g of a solvent-soluble polymer. Accordingly, the average specific polymerization activity of the Ti-containing catalyst component was 5,500 g-PP/mmole-Ti.

Comparative Example 2

The procedure of synthesizing spherical $MgCl_2 \cdot nEtOH$ in Example 14 was repeated except that YF—3860 was not used. A spherical carrier was scarcely formed.

A Ti-containing catalyst component prepared in the same way as in Example 1 using the resulting carrier contained 4.1% by weight of Ti, 63.0% by weight of Cl, 18.0% by weight of Mg and 8.9% by weight of ethyl benzoate as atoms.

Propylene was polymerized in the same way as in Example 1 using the resulting Ti-containing catalyst component to afford 193 g of a white powdery polymer having a boiling n-heptane extraction residue of 94.2%, and a melt flow index of 4.7. But its apparent density was as low as 0.30 g/ml.

The particle size distribution of the polymer was broad, and particles having a size of 0.1 to 1.0 mm accounted for only 59% of the entire polymer particles.

Concentrating the solvent layer afforded 7.0 g of a solvent-soluble polymer.

Example 16

[I] Synthesis of spherical $MgCl_2 \cdot n(n\text{-}BuOH)$

A 2-liter high-speed stirrer fully purged with nitrogen gas was charged with 600 ml of purified kerosene, 10 g of commercially available $MgCl_2$, 23.4 g of n-butanol and 5.3 ml of TSF—451 (dimethylpolysiloxane having a viscosity of $2 \times 10^{-4}$ m²/s (200 cs); a product of Toshiba Silicone Co., Ltd.), and they were stirred at 130°C and 8,000 rpm for 20 minutes. With high speed stirring, the mixture was transferred by means of a Teflon tube having an inside diameter of 5 mm to a 2-liter glass flask equipped with a stirrer into which 1 liter of purified kerosene cooled to −10°C had been placed.

The resulting solid was collected by filtration, and washed fully with hexane to afford a carrier. Microscopic observation showed that the carrier was in the form of completely spherical solid particles having a particle diameter of 5 to 90 μm.

[II] Preparation of a Ti-containing catalyst component

In a 500 ml glass flask, 15.5 g (containing 48.9 millimoles of $MgCl_2$) was suspended in 300 ml of purified kerosene. Ethyl benzoate (2.1 ml) was added, and they were stirred at 25°C for 1 hour. Diethyl aluminum monochloride (10.5 ml) was added dropwise at 0°C over 1 hour, and contacted at 25°C for 1 hour. The solid portion was collected by filtration, thoroughly washed with hexane, and dried. The solid was transferred to a glass flask, and 100 ml of $TiCl_4$ was added. They were stirred at 80°C for 2 hours, followed by standing. The supernatant liquid was removed by decantation, and 100 ml of $TiCl_4$ was further added. The mixture was stirred at 80°C for 2 hours. The solid portion was collected by hot filtration, washed with hot kerosene and hexane, and dried to afford a Ti-Containing catalyst component which contained 3.8% by weight of Ti, 59.0% by weight of Cl, 16.0% by weight of Mg and 14.5% by weight of ethyl benzoate as atoms and had an average particle diameter of 40 μm.

[III] Polymerization

Propylene was polymerized in the same way as in Example 1 using the resulting Ti-containing catalyst component to afford 145 g of a white powdery polymer having a boiling n-heptane extraction residue of 95.8%, an apparent density of 0.39 g/ml and a melt flow index of 4.4. The polymer had an average particle diameter of 730 $\mu$m, and a particle size distribution of 96% in the range of 0.1 to 1.0 mm. The polymer particles were spherical. Concentrating the solvent layer afforded 3.9 g of a solvent-soluble polymer. Accordingly, the average specific polymerization activity of the Ti-containing catalyst component was 6,600 g-PP/mmole-Ti.

## Example 17

[I] Synthesis of spherical $MgCl_2 \cdot nEtOH$

A 2-liter autoclave, after full purging with $N_2$, was charged with 1.5 liters of purified kerosene, 75 g of commercially available $MgCl_2$, 109 g of ethanol and 15 ml of TSF—433 (methylphenyl polysiloxane having a viscosity of $3.5 \times 10^{-4}$ $m^2/s$ (350 c.s.); a product of Toshiba Silicone Co., Ltd.), and they were heated with stirring, and stirred for 20 minutes at 125°C and 600 rpm. The pressure of the inside of the polymerization system was adjusted to 10 $kg/cm^2 \cdot G$ with $N_2$, and a cock attached to a stainless steel tube having an inside diameter of 3 mm kept at 125°C and directly connected to the autoclave was opened to transfer the resulting mixture to a 5-liter glass flask equipped with a stirrer into which 3 liters of purified kerosene cooled to −15°C had been placed. The amount of the mixture transferred was 1 liter, and a period of about 20 seconds was required for the transfer. The resulting solid was collected by filtration, and fully washed with hexane to afford a carrier. Microscopic observation showed that the solid was in the form of completely spherical particles having a particle diameter of 5 to 60 $\mu$m.

[II] Preparation of a Ti-containing catalyst component

A 300 ml glass flask was charged with 8.0 g (containing 34.3 millimoles of $MgCl_2$) of the solid obtained in [I] above and 100 ml of purified kerosene. With stirring, 14.1 ml of triethyl aluminum was added dropwise, and the mixture was stirred at 25°C for 1 hour. It was further stirred for 3 hours at 80°C. The solid portion was collected by filtration, washed fully with hexane, and dried. The resulting solid was suspended in 100 ml of purified kerosene, and dry air was blown into the suspension at room temperature for 2 hours with stirring. The solid portion was collected by filtration, and thoroughly washed with hexane. The resulting solid was suspended in 100 ml of purified kerosene, and 2.2 ml of ethyl benzoate was added, and the mixture was stirred at 25°C for 1 hour and then at 80°C for 2 hours. The solid portion was collected by filtration, thoroughly washed with hexane, and dried.

The solid was transferred to a 200 ml glass flask, and 100 ml of $TiCl_4$ was added. The mixture was stirred at 90°C for 2 hours. The supernatant liquid was removed by decantation, and 100 ml of $TiCl_4$ was added, followed by stirring at 90°C for 2 hours.

The solid portion was collected by hot filtration, washed thoroughly with hot kerosene and hexane, and dried to afford a Ti-containing catalyst component which contained 2.8% by weight of Ti, 63.0% by weight of Cl, 20.0% by weight of Mg and 9.8% by weight of ethyl benzoate as atoms. It had a specific surface area of 320 $m^2/g$ and an average particle diameter of 38 $\mu$m.

[III] Polymerization

Propylene was polymerized in the same way as in Example 1 using the Ti-containing catalyst component thus prepared. There was obtained 212 g of a white powdery polymer having a boiling n-heptane extraction residue of 96.0%, an apparent density of 0.38 g/ml and a melt flow index of 3.0. The polymer was in the form of spherical particles having an average particle diameter of 790 $\mu$m and a particle size distribution of 96% in the range of 0.1 to 1.0 mm. Concentrating the solvent layer afforded 5.9 g of a solvent-soluble polymer. Accordingly, the average specific polymerization activity of the Ti-containing catalyst component was 9,700 g-PP/mmole-Ti.

## Example 18

[I] Synthesis of spherical $MgCl_2 \cdot nEtOH$

A catalyst carrier was synthesized in the same way as in Example 13 except that in the synthesis of spherical $MgCl_2 \cdot nEtOH$ in Example 13, 112.5 g of $MgCl_2$, 163 g of ethanol and 5 g of Emasol 320 were used. The resulting solid was in the form of completely spherical particles having a particle diameter of 5 to 40 $\mu$m.

[II] Preparation of a Ti-containing catalyst component

A 300 ml glass flask was charged with 150 ml of $TiCl_4$, and 7.5 g of the solid obtained in [I] above suspended in 15 ml of purified kerosene was added at 20°C with stirring. Then, 1.83 ml of ethyl benzoate was added, and the mixture was heated to 100°C. It was stirred at 100°C for 2 hours, and then the stirring was stopped. The supernatant liquid was removed by decantation, and 150 ml of $TiCl_4$ was added. The mixture was stirred at 110°C for 2 hours. The solid portion was collected by hot filtration, and washed fully with hot kerosene and hexane to afford a Ti-containing catalyst component

containing 4.4% by weight of Ti, 59.0% by weight of Cl, 19.0% by weight of Mg and 13.0% by weight of ethyl benzoate as atoms, and having a specific surface area of 207 $m^2/g$ and an average particle diameter of 13 $\mu m$.

[III] Polymerization

Propylene was polymerized in the same way as in Example 1 using the resulting Ti-containing catalyst component. There was obtained 295 g of a white powdery polymer which had a boiling n-heptane extraction residue of 96.1%, an apparent density of 0.45 g/ml and a melt flow index of 3.5. The polymer had an average particle diameter of 340 $\mu m$ and a particle size distribu-tion of 99% by weight in the range of 0.1 to 1.0 mm, and was in the form of spherical particles. Concentrating the solvent layer afforded 4.2 g of a solvent-soluble polymer. Accordingly, the average specific polymerization activity of the Ti-containing catalyst component was 13,300 g-PP/mmole-Ti.

Example 19

[I] Synthesis of spherical $MgCl_2 \cdot nEtOH$

A catalyst carrier was prepared in the same way as in Example 13 except that in the synthesis of spherical $MgCl_2 \cdot nEtOH$ in Example 13, the pressure of the inside of the autoclave was adjusted to 3 $kg/cm^2 \cdot G$ with $N_2$, and a stainless tube having an inside diameter of 2 mm was used in transferring the mixture to the glass flask. The time required for the transfer was about 60 seconds. The solid obtained was in the form of completely spherical particles having particle diameter of 5 to 18 $\mu m$.

[II] Preparation of a Ti-containing catalyst component

A 300 ml glass flask was charged with 15 g of the solid obtained in [I] above and 150 ml of purified kerosene. With stirring, 106 ml of $TiCl_4$ was added dropwise at 20°C and then, the mixture was heated to 80°C. The mixture was stirred at 80°C for 1 hour, and then the stirring was stopped. The supernatant liquid was removed by decantation. Furthermore, 200 ml of $TiCl_4$ was added, and the mixture was stirred at 110°C for 2 hours. The solid portion was collected by hot filtration, and washed thoroughly with hot kerosene and hexane to afford a Ti-containing catalyst component. The resulting catalyst component contained 8.2% by weight of Ti, 65% by weight of Cl and 17% by weight of Mg as atoms, and had an average particle diameter of 7 $\mu m$.

[III] Polymerization

A 3-liter autoclave was charged with 1 liter of hexane, and under an atmosphere of $N_2$, 1.0 mmole of triisobutyl aluminum and 0.01 mg, calculated as Ti atom, of the Ti-containing solid catalyst component obtained in [II] above were fed into the autoclave.

The system was heated to 85°C, and the total pressure was raised to 8.0 $kg/cm^2$.G with ethylene. Ethylene was polymerized for 2 hours while maintaining the pressure of ethylene. After the polymerization, the slurry containing the resulting polymer was filtered to afford 543 g of a white powdery polymer having an apparent density of 0.35 g/ml. The polymer was in the form of spherical particles having an average particle diameter of 390 $\mu m$ and a particle size distribution of 100% in the range of 0.1 to 1.0 mm. Accordingly, the average specific polymerization activity of the Ti-containing catalyst component was 54,300 g-PE/mmole-Ti.

## Claims

1. A process for producing spherical carrier particles for olefin polymerization catalyst, which comprises

(i) forming a suspension of molten particles of an adduct of a halogen-containing magnesium compound and an active hydrogen-containing organic compound in an organic liquid medium (A) in the presence of at least one auxiliary component selected from surface-active agents which are not siloxanes and siloxanes, and

(ii) quenching the resulting suspension to solidify the adduct particles.

2. A process according to claim 1 wherein said quenching is performed by contacting the suspension with an organic liquid medium (B) having a temperature low enough to solidify the molten particles.

3. A process according to claim 2 wherein the temperature of said organic liquid medium (B) to be contacted with the suspension is at least 10°C lower than the melting point of said adduct particles.

4. A process according to claim 1, 2 or 3 wherein said halogen-containing magnesium compound is a magnesium dihalide or a complex thereof.

5. A process according to any one of claims 1 to 4 wherein said active hydrogen-containing organic compound is an alcohol having 1 to 18 carbon atoms, phenol having 6 to 15 carbon atoms, organic carboxylic acid having 1 to 18 carbon atoms or amine having 1 to 16 carbon atoms.

6. A process according to any one of the preceding claims wherein said organic liquid medium (A) is a hydrocarbon, halogenated hydrocarbon or ether.

7. A process according to any one of the preceding claims, wherein the auxiliary component comprises at least one nonionic surface-active agent.

8. A process according to claim 7 wherein the nonionic surface-active agent has an HLB of less than 6.

9. A process according to any one of the preceding claims wherein the amount of the auxiliary component used is 0.5 to 20 g of surface-active agent per liter of said organic liquid medium (A).

10. A process according to any one of claims 1 to 6 wherein the amount of the auxiliary component is 0.1 to 40% by weight of siloxane based on the weight of said organic liquid medium (A).

11. A catalyst suitable for use in the polymerisation of olefins comprising a transition metal compound supported on spherical carrier particles produced by a process as claimed in any one of claims 1 to 10, and an organometallic compound of a metal of Group I, II or III of Mendelejeff's Periodic Table.

12. A process for the polymerization of olefins which comprises polymerizing at least one olefin in the presence of a catalyst as claimed in claim 11.

**Revendications**

1. Procédé d'obtention de particules sphériques de support pour catalyseurs de polymérisation d'oléfines, qui comprend

(i) la formation d'une suspension de particules fondues d'un produit d'addition d'un composé du magnésium contenant un halogène et d'un composé organique contenant de l'hydrogène actif dans un milieu liquide organique (A) en présence d'au moins un composant auxiliaire choisi parmi les agents tensio-actifs qui ne sont pas des siloxanes et les siloxanes, et

(ii) le refroidissement de la suspension résultante pour solidifier les particules du produit d'addition.

2. Procédé selon la revendication 1, dans lequel ledit refroidissement est effectué en mettant en contact la suspension avec un milieu liquide organique (B) possédant une température suffisamment basse pour solidifer les particules fondues.

3. Procédé selon la revendication 2, dans lequel la température dudit milieu liquide organique (B) avec lequel la suspension est mise en contact est inférieure d'au moins 10°C au point de fusion desdites particules du produit d'addition.

4. Procédé selon la revendication 1, 2 ou 3, dans lequel ledit composé du magnésium contenant un halogène est un dihalogénure de magnésium ou un complexe de celui-ci.

5. Procédé selon l'une quelconque des revendications 1 à 4, dans lequel ledit composé organique contenant de l'hydrogène actif est un alcool possédant de 1 à 18 atomes de carbone, un phénol possédant de 6 à 15 atomes de carbone, un acide organique carboxylique possédant de 1 à 18 atomes de carbone ou une amine possédant de 1 à 16 atomes de carbone.

6. Procédé selon l'une quelconque des revendications précédentes, dans lequel ledit milieu liquide organique (A) est un hydrocarbure, un hydrocarbure halogéné ou un éther.

7. Procédé selon l'une quelconque des revendications précédentes, dans lequel le composant auxiliare comprend au moins un agent tensio-actif non ionique.

8. Procédé selon la revendication 7 dans lequel ledit agent tensio-actif non ionique possède un HLB inférieur à 6.

9. Procédé selon l'une quelconque des revendications précédentes, dans lequel la quantité de composant auxiliaire utilisé est de 0,5 à 20 grammes d'agent tensio-actif par litre dudit milieu liquide organique (A).

10. Procédé selon l'une quelconque des revendications 1 à 6, dans lequel la quantité du composant auxiliaire est de 0,1 à 40% en poids de siloxane rapporté au poids dudit milieu liquide organique (A).

11. Catalyseur apte à être utilisé dans la polymérisation d'oléfines comprenant un composé de métal de transition supporté sur des particules sphériques de support produites par un procédé selon l'une quelconque des revendications 1 à 10 et un composé organo-métallique d'un métal des groupes I, II ou III du Tableau Périodique de Mendeleieff.

12. Procédé de polymérisation d'oléfines comprenant l'étape consistant à polymériser au moins une oléfine en présence d'un catalyseur selon la revendication 11.

**Patentansprüche**

1. Verfahren zur Herstellung kugelförmiger Trägerteilchen für einen Katalysator für die Olefinpolymerisation dadurch gekennzeichnet, daß

(i) eine Suspension aus geschmolzenen Teilchen eines Adduktes aus einer Halogen enthaltenden Magnesiumverbindung und einer aktiven Wasserstoff enthaltenden organischen Verbindung in einem organischen flüssigen Medium (A) in Gegenwart mindestens einer Hilfsverbindung, ausgewählt aus grenzflächenaktiven Stoffen, die keine Siloxane sind, sowie Siloxanen, hergestellt und

(ii) die erhaltene Suspension abgeschreckt wird, um die Adduktteilchen zu verfestigen.

2. Verfahren nach Anspruch 1, dadurch gekennzeichnet, daß abgeschreckt wird, indem die Suspension mit einem organischen flüssigen Medium (B) in Berührung gebracht wird, dessen Temperatur niedrig genug ist, um die geschmolzenen Teilchen zu verfestigen.

3. Verfahren nach Anspruch 2, dadurch gekennzeichnet, daß die Temperatur des organischen flüssigen Mediums (B), das mit der Suspension in Berührung gebracht wird, um mindestens 10°C niedriger ist, als der Schmelzpunkt der Adduktteilchen.

4. Verfahren nach Anspruch 1, 2 oder 3, dadurch gekennzeichnet, daß die Halogen enthaltende Magnesiumverbindung ein Magnesiumdihalogenid oder ein Komplex davon ist.

5. Verfahren nach einem der Ansprüche 1 bis 4, dadurch gekennzeichnet, daß die aktiven Wasserstoff enthaltende organische Verbindung ein Alkohol mit 1 bis 18 Kohlenstoffatomen, ein Phenol mit 6 bis 15 Kohlenstoffatomen, eine organische Carbonsäure mit 1 bis 18 Kohlenstoffatomen oder ein Amin mit 1 bis 16 Kohlenstoffatomen ist.

6. Verfahren nach einem der vorangegangenen Ansprüche, dadurch gekennzeichnet, daß das organische flüssige Medium (A) ein Kohlenwasserstoff, ein Halogenkohlenwasserstoff oder ein Ether ist.

7. Verfahren nach einem der vorangegangenen Ansprüche, dadurch gekennzeichnet, daß die Hilfsverbindung mindestens ein nicht-ionisches grenzflächenaktives Mittel umfaßt.

8. Verfahren nach Anspruch 7, dadurch gekennzeichnet, daß das nicht-ionische grenzflächenaktive Mittel einen HLB (-Wert) von weniger als 6 aufweist.

9. Verfahren nach einem der vorangegangenen Ansprüche, dadurch gekennzeichnet, daß die Menge der eingesetzten Hilfsverbindung 0,5 bis 20 g grenzflächenaktives Mittel je Liter des organischen flüssigen Mediums (A) beträgt.

10. Verfahren nach einem der Ansprüche 1 bis 6, dadurch gekennzeichnet, daß die Menge der Hilfsverbindung 0,1 bis 40 Gew.-% Siloxan, bezogen auf das Gewicht des organischen flüssigen Mediums (A) beträgt.

11. Katalysator, geeignet zur Verwendung bei der Polymerisation von Olefinen, umfassend eine Übergangsmetallverbindung auf kugelförmigen Trägerteilchen, hergestellt durch ein Verfahren nach einem der Ansprüche 1 bis 10, sowie eine metallorganische Verbindung eines Metalls der Gruppen I, II oder III des Mendelejeff'schen Periodensystems.

12. Verfahren zur Polymerisation von Olefinen, bei dem mindestens ein Olefin in Gegenwart eines Katalysators nach Anspruch 11 polymerisiert wird.